# EUROPÄISCHE PATENTSCHRIFT

(11) **EP 2 285 606 B1**
(45) Veröffentlichungstag und Bekanntmachung des Hinweises auf die Patenterteilung: **30.04.2014**
(21) Anmeldenummer: 09765457.8
(22) Anmeldetag: 17.06.2009
(51) Int. Cl.: B62D 33/06, B60G 17/027, B60G 21/05, B60G 21/055

(54) **STABILISATOR FÜR EIN NUTZFAHRZEUG**
STABILIZER FOR A UTILITY VEHICLE
BARRE ANTI-ROULIS POUR VÉHICULE UTILITAIRE

(30) Priorität: 19.06.2008 DE 102008002524
(43) Veröffentlichungstag der Anmeldung: 23.02.2011
(73) Patentinhaber: ZF Friedrichshafen AG, 88038 Friedrichshafen (DE)
(72) Erfinder: BUHL, Manfred, 49143 Bissendorf (DE); LANGHORST, Friedhelm, 49356 Diepholz (DE); EILERS, Bernhard, 26897 Breddenberg (DE)
(86) Internationale Anmeldenummer: PCT/DE2009/050030
(87) Internationale Veröffentlichungsnummer: WO 2009/152821

(56) Entgegenhaltungen:
- EP-A- 1 886 850
- EP-A- 2 065 232
- EP-A- 2 065 233
- DE-A1-102004 059 274
- DE-A1-102007 007 417
- DE-A1-102007 028 852
- DE-C1- 19 533 478
- GB-A- 2 388 826
- JP-A- 9 030 235
- JP-A- 2000 313 218

## Beschreibung

Die Erfindung betrifft einen Stabilisator für ein Nutzfahrzeug, mit einer länglichen Torsionsfeder, zwei fest mit der Torsionsfeder verbundenen und sich von dieser wegerstreckenden Lenkerarmen, zwischen denen sich die Torsionsfeder erstreckt und einen der Torsionsfeder parallel geschalteten Aktuator. Ein Beispiel eines solchen Stabilisator ist aus der DE 10 2004 059274 A1 bekannt.

Die US 4 648 620 offenbart einen Stabilisator für ein Fahrzeug, der einen Torsionsfederstab aufweist, an dessen Enden jeweils ein abgewinkelter Arm angeordnet ist. Dabei sind die Arme über Gelenke mit einer Fahrzeugachse verbunden. Der Torsionsfederstab erstreckt sich durch ein zweigeteiltes Torsionsfederrohr hindurch, dessen äußere Enden mit dem Torsionsfederstab verschweißt sind. Mittels einer betätigbaren Kupplung können die beiden Teile des Torsionsfederrohrs lösbar miteinander verbunden werden.

Bei vielen Nutzfahrzeugen wird zur Wankstabilisierung die Fahrerhauskabine im vorderen Bereich mit dem Fahrzeugrahmen durch einen Stabilisator verbunden. Dieser Stabilisator besteht aus zwei Lenkern bzw. Hebeln und einem entweder runden, rohrförmigen oder als Profil ausgebildeten Torsionsstab, der die beiden Lenker verdrehfest miteinander verbindet. Der Nachteil bei diesem System ist allerdings, das der Fahrkomfort insbesondere beim Fahren auf schlechten, unebenen und kurvigen Wegstrecken bedingt durch ein trotz der Wankstabilisierung starkes Wanken der Fahrerhauskabine sehr leidet. Um den Fahrkomfort zu verbessern gibt es eine Entwicklung, das Wanken der Fahrerhauskabine auch bei diesen Situationen durch den Einbau eines zusätzlichen aktiven Bauteils (Aktuator) in den Stabilisator zu verhindern oder zu minimieren. Die Kabine bleibt dann relativ zur Fahrbahn in einer Ebene. Allerdings können hohe Biegemomente und Seitenkräfte im Fahrbetrieb zu einem Verschleiß und somit zu einer signifikanten Verkürzung der Lebensdauer bzw. zu einer Beschädigung oder Zerstörung des Aktuators führen, insbesondere wenn dieser einen hydraulischen Schwenkmotor aufweist.

Ausgehend hiervon liegt der Erfindung die Aufgabe zugrunde, einen Stabilisator der eingangs genannten Art derart weiterzubilden, dass der Aktuator vor Beschädigungen durch Biegemomente geschützt wird. Bevorzugt soll der Aktuator auch vor Beschädigungen durch Seitenkräfte geschützt werden.

Diese Aufgabe wird erfindungsgemäß mit einem Stabilisator nach Anspruch 1 gelöst. Bevorzugte Weiterbildungen der Erfindung sind in den Unteransprüchen gegeben.

Der erfindungsgemäße Stabilisator für ein Nutzfahrzeug, insbesondere Nutzkraftfahrzeug, weist eine längliche Torsionsfeder, zwei fest mit der Torsionsfeder verbundene und sich von dieser weg erstreckende Lenkerarme, zwischen denen sich die Torsionsfeder erstreckt, und einen zu der Torsionsfeder parallel geschalteten Aktuator auf, der unter Zwischenschaltung von Scharniergelenken oder Blattfedern mit der Torsionsfeder oder den Lenkerarmen verbunden ist.

Durch den Einsatz von Scharniergelenken oder Blattfedern ist es möglich, das keine oder lediglich sehr geringe Biegemomente auf den Aktuator übertragen werden, die z.B. aus bei der Kurvenfahrt auftretenden Seitenkräften resultieren. Andererseits können Drehbewegungen des Aktuators mittels der Scharniergelenke oder Blattfedern übertragen werden.

Die Verwendung von Blattfedern eignet sich insbesondere bei relativ kleinen Schwenkwinkeln, sodass die Blattfedern auch als vereinfachte und kostengünstige Gelenkausführung betrachtet werden können.

Der Aktuator ist bevorzugt unter Zwischenschaltung der Scharniergelenke oder Blattfedern beidseitig mit der Torsionsfeder oder den Lenkerarmen verbunden. Insbesondere ist der Aktuator unter Zwischenschaltung der Scharniergelenke oder Blattfedern mit den Lenkerarmen oder den Enden der Torsionsfeder verbunden.

Der Aktuator bildet insbesondere einen Dreh- oder Rotationsaktuator. Bevorzugt weist der Aktuator zwei relativ zueinander verdrehbare Maschinenteile auf, die mit den Scharniergelenken oder Blattfedern verbunden sind. Die beiden Maschinenteile werden vorzugsweise durch Betätigen des Aktuators relativ zueinander um eine Drehachse verdreht. Insbesondere sind die Maschinenteile des Aktuators unter Zwischenschaltung der Scharniergelenke oder Blattfedern mit der Torsionsfeder oder den Lenkerarmen verbunden. Der Aktuator weist vorzugsweise einen Motor oder Schwenkmotor auf, der insbesondere ein hydraulischer Schwenkmotor ist. Ein hydraulischer Schwenkmotor kann hohe Drehmomente bei relativ kleiner Baugröße vergleichsweise schnell erzeugen. Die Maschinenteile können mit dem Schwenkmotor verbunden oder Teil des Schwenkmotors sein. Beispielsweise bildet ein erstes der Maschinenteile einen Rotor und ein zweites der Maschinenteile einen Stator des Schwenkmotors. Ferner ist es möglich, dass zumindest eines der Maschinenteile unter Zwischenschaltung eines Getriebes mit dem Schwenkmotor verbunden ist.

Die Lenkerarme sind bevorzugt von der Torsionsfeder abgewinkelt. Insbesondere sind die Lenkerarme schräg, senkrecht oder im Wesentlichen senkrecht zur Längsachse der Torsionsfeder ausgerichtet. Die Lenkerarme bilden zusammen mit der Torsionsfeder bevorzugt ein U-Profil. Insbesondere ist jeder der Lenkerarme drehfest mit der Torsionsfeder verbunden.

Die Scharnierachsen der Scharniergelenke sind bevorzugt senkrecht oder im Wesentlichen senkrecht zur Längsachse der Torsionsfeder und/oder zur Drehachse des Aktuators ausgerichtet. Ferner sind die Blattebenen der Blattfedern bevorzugt senkrecht oder im Wesentlichen senkrecht zur Längsachse der Torsionsfeder und/oder zur Drehachse des Aktuators ausgerichtet.

Der Aktuator ist bevorzugt unter Zwischenschaltung wenigstens eines länglichen Betätigungsglieds mit den Scharniergelenken oder Blattfedern verbunden. Insbesondere ist das wenigstens eine Betätigungsglied von einem Rohr oder Stab gebildet und weist verzugsweise einen runden Querschnitt auf. Ferner kann das wenigstens eine Betätigungsglied als Torsionsfeder ausgebildet sein. Gemäß einer Weiterbildung sitzt der Aktuator zwischen zwei Betätigungsgliedern und ist durch diese mit den Scharniergelenken oder Blattfedern verbunden.

Die Blattfedern können mit dem Aktuator spielfrei verbunden sein. Ferner können die Blattfedern mit den Lenkerarmen spielfrei verbunden sein. Zum Ausbilden der spielfreien Verbindungen sind z.B. Bolzenverbindungen, Schraubenverbindungen oder Klemmverbindungen einsetzbar. Beispielsweise werden die Blattfedern mit dem Aktuator und/oder mit den Lenkerarmen durch formschlusserzeugende Verbindungen mit zusätzlicher Schraubensicherung oder durch reib- bzw. kraftschlusserzeugende Klemmverbindungen durch Schrauben verbunden. Möglich sind auch form- oder kraftschlusserzeugende Verbindungen durch Kegel- oder Kugelbundschrauben wie bei einer Radbefestigung. Bevorzugt sind die Blattfedern sowohl mit dem Aktuator als auch mit den Lenkerarmen durch Schraubverbindungen verbunden. Insbesondere umfasst jede der Schraubverbindungen mindestens zwei, bevorzugt drei Schrauben.

Die Torsionsfeder ist vorzugsweise von einem Rohr, insbesondere von einem Rohr mit wenigstens einer Längsnut gebildet. Hierdurch lässt sich eine sehr geringe Torsions- oder Residualsteifigkeit erzielen, die z.B. auch einen Betrieb des Stabilisators bei Ausfall des Aktuators oder Schwenkmotors ermöglicht (fail-safe Verhalten des Stabilisators). Alternativ lässt sich eine geringe Torsionssteifigkeit auch durch ein offenes Profil erzielen. Der Querschnitt der Torsionsfeder ist vorzugsweise rund. Gemäß einer ersten Variante der Erfindung ist der Aktuator außerhalb der Torsionsfeder und im Abstand zu dieser angeordnet. In diesem Fall ist die Drehachse des Aktuators oder Schenkmotors bevorzugt parallel zur Längsachse der Torsionsfeder ausgerichtet. Gemäß einer zweiten Variante sitzt der Aktuator in einem Innenraum der Torsionsfeder. In diesem Fall fällt die Drehachse des Aktuators oder Schwenkmotors vorzugsweise mit der Längsachse oder Längsmittelachse der Torsionsfeder zusammen.

Die Torsionsfeder ist bevorzugt an einer Fahrerhauskabine des Nutzfahrzeugs gelagert, wobei die Lenkerarme mit einem Fahrzeugrahmen des Nutzfahrzeugs verbunden sind. Insbesondere ist die Torsionsfeder an der Fahrerhauskabine, vorzugsweise um die Längsachse oder Längsmittelachse der Torsionsfeder, drehbar gelagert. Die Lagerung der Torsionsfeder an der Fahrerhauskabine erfolgt z.B. über Drehlager, die vorzugsweise zur Aufnahme einer Schwenkbewegung mit einer Gleitschicht aus einem Gleitwerkstoff und zur Dämpfung mit einer Gummischicht versehen sind. Insbesondere erfolgt die Lagerung der Torsionsfeder an der Fahrerhauskabine über Drehgelenke oder Gummigleitlager. Die Verbindung der Lenkerarme mit dem Fahrzeugrahmen erfolgt z.B. über Gummilager. Hierdurch kann eine Dämpfung und Entkopplung von Schwingungen erzielt werden.

Gemäß einer Alternative ist die Torsionsfeder am Fahrzeugrahmen des Nutzfahrzeugs gelagert, wobei die Lenkerarme mit der Fahrerhauskabine des Nutzfahrzeugs verbunden sind. Insbesondere ist die Torsionsfeder am Fahrzeugrahmen, vorzugsweise um die Längsachse oder Längsmittelachse der Torsionsfeder, drehbar gelagert. Die Lagerung der Torsionsfeder am Fahrzeugrahmen erfolgt z.B. über Drehlager, die vorzugsweise zur Aufnahme einer Schwenkbewegung mit einer Gleitschicht aus einem Gleitwerkstoff und zur Dämpfung mit einer Gummischicht versehen sind. Insbesondere erfolgt die Lagerung der Torsionsfeder an der Fahrerhauskabine über Drehgelenke oder Gummigleitlager. Die Verbindung der Lenkerarme mit der Fahrerhauskabine erfolgt z.B. über Gummilager.

Gemäß einer Ausführungsform besteht der erfindungsgemäße Stabilisator aus zwei Hebelarmen und einem mit mindestens einer Längsnut versehenen Verbindungsrohr. Durch diese Nut(en) erhält der Stabilisator eine sehr geringe Torsionssteifigkeit (Residualsteifigkeit), bleibt aber biegesteif. Dieses lässt sich alternativ auch durch Verwendung eines offenen Profils erreichen. Parallel zum Stabilisatorrohr ist ein Aktuator angeordnet, der beidseitig mit dem Stabilisator verbunden ist. Da der im Aktuator angeordnete hydraulische Schwenkmotor jedoch nur sehr geringe Biegemomente verträgt, kommt eine Verbindungslösung zum Einsatz, bei der keine oder nur sehr geringe aus der Verdrehung des Stabilisators und durch Seitenkräfte hervorgerufene Biegemomente (Kurvenfahrt) auf den Schwenkmotor wirken. Dies wird durch den Einsatz von beidseitig des Aktuators angebrachten Scharniergelenken bzw. Blattfedern erreicht.

Durch den Einsatz der Scharniergelenke oder Blattfedern ist es möglich, ein Drehmoment des Schwenkmotors auf den Stabilisator zu übertragen. Vorteilhafterweise werden bei Gelenken keine bzw. bei Blattfedern nur sehr geringe aus Verdrehung und Seitenkräften (Kurvenfahrt) resultierende Biegemomente auf den Schwenkmotor übertragen. Ein zusätzlicher Vorteil der Blattfedern ist der, dass deren Befestigung absolut spielfrei gestaltet werden kann. Hier bieten sich Befestigungsarten wie z.B. Bolzenverbindungen (Formschluss durch Presspassung) mit zusätzlicher Schraubensicherung, Schraubenverbindungen mit Kugel- oder Kegelbundschrauben (Form- und Reibschluss) oder reine Klemm- / Schraubenverbindungen (Reibschluss) an. Ferner ermöglicht der Einsatz von Blattfedern einen einfachen Austausch des Aktuators.

Die Erfindung betrifft ferner die Verwendung eines erfindungsgemäßen Stabilisators zur Wankstabilisierung einer Fahrerhauskabine eines Nutzfahrzeugs. Bevorzugt ist dabei die Fahrerhauskabine mittels des Stabilisators mit einem Fahrzeugrahmen des Nutzfahrzeugs verbunden. Die Wankstabilisierung der Fahrerhauskabine erfolgt insbesondere relativ zu dem Fahrzeugrahmen.

Ferner betrifft die Erfindung ein Nutzfahrzeug, insbesondere Nutzkraftfahrzeug, mit einem Fahrzeugrahmen und einer Fahrerhauskabine, die mittels eines erfindungsgemäßen Stabilisators mit dem Fahrzeugrahmen verbunden ist.

Die Erfindung wird nachfolgend anhand bevorzugter Ausführungsformen unter Bezugnahme auf die Zeichnung beschrieben. In der Zeichnung zeigen:
- Fig. 1: eine teilweise perspektivische Darstellung eines Nutzfahrzeugs mit einem Stabilisator gemäß einer ersten Ausführungsform der Erfindung,
- Fig. 2: eine perspektivische Ansicht des Stabilisators gemäß der ersten Ausführungsform,
- Fig. 3: eine perspektivische Ansicht eines Stabilisators gemäß einer zweiten Ausführungsform der Erfindung und
- Fig. 4: eine perspektivische Ansicht eines Stabilisators gemäß einer dritten Ausführungsform der Erfindung.

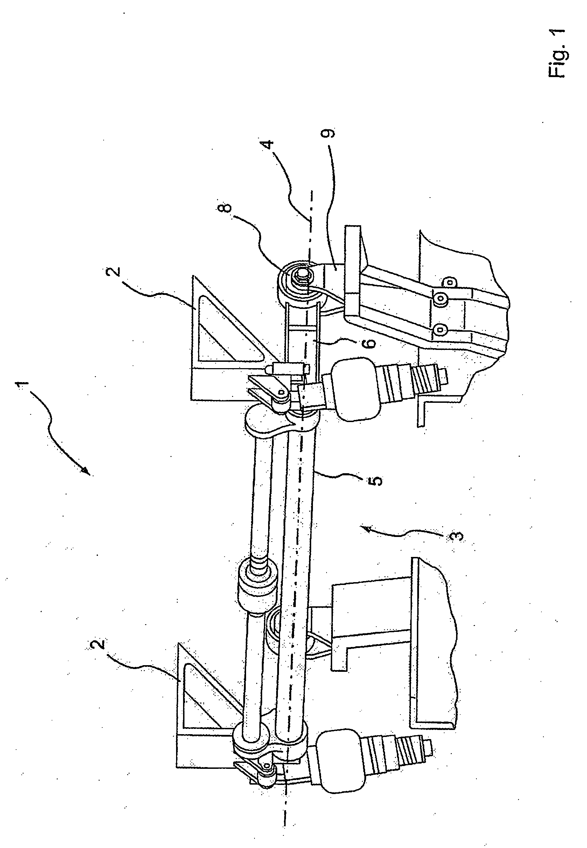

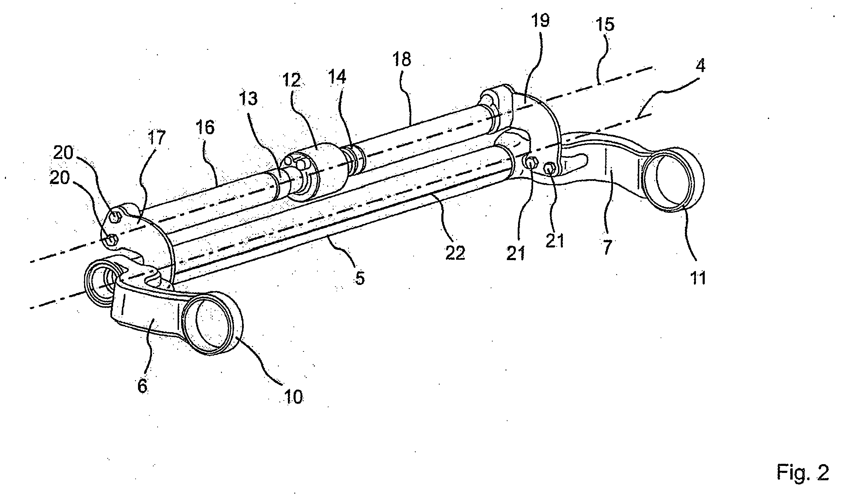

Aus Fig. 1 ist eine teilweise perspektivische Ansicht eines Nutzfahrzeugs 1 mit einer Fahrerhauskabine 2 ersichtlich, an der ein Stabilisator 3 gemäß einer ersten Ausführungsform der Erfindung um eine Achse 4 drehbar gelagert ist. Der Stabilisator 3 weist eine längliche Torsionsfeder 5 auf, deren Längsachse mit der Achse 4 zusammenfällt. Mit den Enden der Torsionsfeder 5 sind Lenkerarme 6 und 7 (siehe Fig. 2) drehfest verbunden, die im Abstand zu der Torsionsfeder 5 unter Zwischenschaltung von Gummilagern 8 mit einem Fahrzeugrahmen 9 des Nutzfahrzeugs 1 verbunden sind.

Aus Fig. 2 ist eine perspektivische Darstellung des Stabilisators 3 gemäß der ersten Ausführungsform ersichtlich, wobei zur Aufnahme der Gummilager 8 an den der Torsionsfeder 5 abgewandten Enden der Lenkerarme 6 und 7 Lageraufnahmen 10 und 11 ausgebildet sind. Der Stabilisator 3 weist einen als hydraulischen Schwenkmotor ausgebildeten Aktuator 12 auf, mittels welchem zwei Maschinenteile 13 und 14 relativ zueinander um eine Achse 15 verdrehbar sind, die parallel zur Achse 4 ausgerichtet ist. Das Maschinenteil 13 ist drehfest mit einem Ende eines Verbindungsrohrs 16 verbunden, dessen anderes Ende drehfest mit einer Blattfeder 17 verbunden ist. Ferner ist das Maschinenteil 14 drehfest mit einem Ende eines Verbindungsrohrs 18 verbunden, dessen anderes Ende drehfest mit einer Blattfeder 19 verbunden ist. Die drehfeste Verbindung des Verbindungsrohrs 16 mit der Blattfeder 17 erfolgt durch Schraubverbindungen 20. In entsprechender Weise ist das Verbindungsrohr 18 mit der Blattfedern 19 verschraubt.

Die Blattebenen der Blattfedern 17 und 19 verlaufen parallel zueinander und sind senkrecht zu den Achsen 4 und/oder 15 ausgerichtet. Ferner sind die Blattfedern 17 und 19 abgewinkelt ausgebildet bzw. die Blattfedern 17 und 19 folgen näherungsweise dem Verlauf eines Viertelkreises. Das dem Verbindungsrohr 18 abgewandte Ende der Blattfeder 19 ist durch Schraubverbindungen 21 mit dem Lenkerarm 7 verbunden. In entsprechender Weise ist das dem Verbindungsrohr 16 abgewandte Ende der Blattfeder 17 mit dem Lenkerarm 6 verschraubt. Die Torsionsfeder 5 weist eine Längsnut 22 auf, sodass die Torsionsfeder 5 eine geringe Torsionssteifigkeit bei gleichzeitig hoher Biegesteifigkeit aufweist.

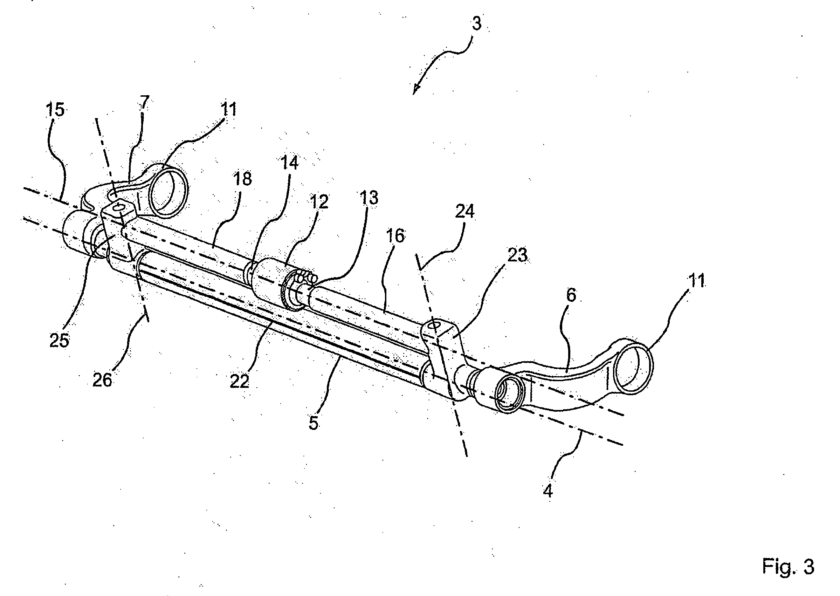

Aus Fig. 3 ist eine perspektivische Ansicht eines Stabilisators 3 gemäß einer zweiten Ausführungsform der Erfindung ersichtlich, wobei zu der ersten Ausführungsform ähnliche oder identische Merkmale mit denselben Bezugszeichen wie bei der ersten Ausführungsform bezeichnet sind. Das dem Maschinenteil 13 abgewandte Ende des Verbindungsrohrs 16 ist über ein Scharniergelenk 23 mit einem Ende der Torsionsfeder 5 verbunden, wobei das Scharniergelenk 23 eine Scharnierachse 24 aufweist, die senkrecht zur Drehachse 15 des Aktuators ausgerichtet ist. Ferner ist das dem Maschinenteil 14 abgewandte Ende des Verbindungsrohrs 18 über ein Scharniergelenk 25 mit dem anderen Ende der Torsionsfeder 5 verbunden, wobei das Scharniergelenk 25 eine Scharnierachse 26 aufweist, die senkrecht zur Drehachse 15 des Aktuators ausgerichtet ist. Somit sind hier die Blattfedern gemäß der ersten Ausführungsform durch die Scharniergelenke ersetzt. Zur weiteren Beschreibung der zweiten Ausführungsform wird auf die Beschreibung der ersten Ausführungsform verwiesen.

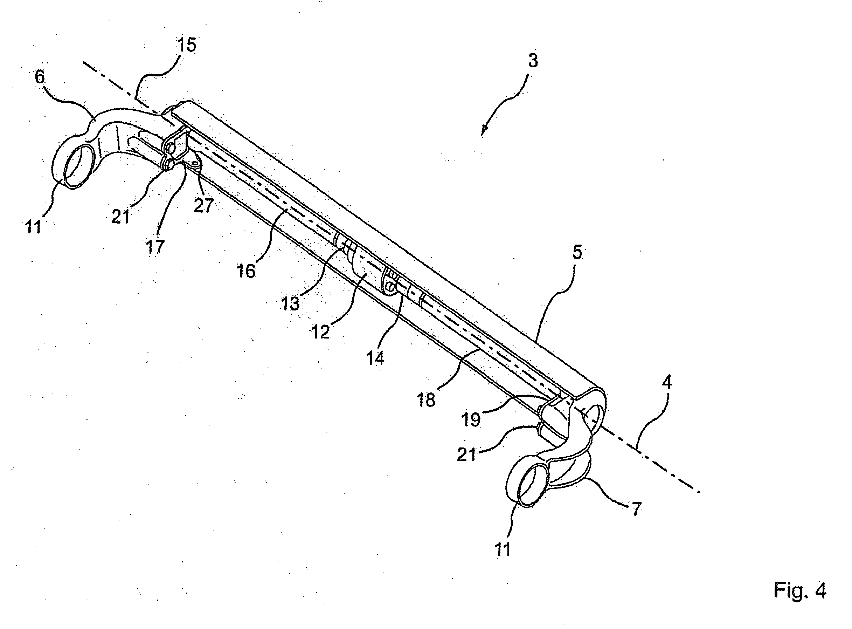

Aus Fig. 4 ist eine perspektivische Ansicht eines Stabilisators 3 gemäß einer dritten Ausführungsform der Erfindung ersichtlich, wobei zu der ersten Ausführungsform ähnliche oder identische Merkmale mit denselben Bezugszeichen wie in der ersten Ausführungsform bezeichnet sind. Die Torsionsfeder 5 ist als offenes Hohlprofil ausgebildet, in dessen Innenraum der Aktuator 12 mit den Maschinenteilen 13 und 14 sowie mit den Verbindungsrohen 16 und 18 verläuft. Die Drehachse 15 des Aktuators 12 fällt hier mit der Längsachse 4 der Torsionsfeder 5 zusammen. Das dem Maschinenteil 13 abgewandte Ende des Verbindungsrohrs 16 ist mittels einer stirnseitigen Verzahnung 27, insbesondere einer Hirth-Verzahnung, drehfest mit der Blattfeder 17 verbunden. In entsprechender Weise ist das dem Maschinenteil 14 abgewandte Ende des Verbindungsrohrs 18 mit der Blattfeder 19 drehfest verbunden. Die Blattfedern 17 und 19 sind, wie bei der ersten Ausführungsform, mittels Schraubverbindungen 21 mit den Lenkerarmen 6 bzw. 7 verbunden. Zur weiteren Beschreibung der dritten Ausführungsform wird auf die Beschreibung der ersten Ausführungsform verwiesen.

Zwar ist der Aktuator in den gezeigten Ausführungsformen mittig zwischen den Blattfedern oder Scharniergelenken angeordnet, alternativ kann der Aktuator aber auch außermittig oder seitlich angeordnet sein. In diesem Fall kann sogar eines der Verbindungsrohre entfallen, wenn der Aktuator direkt an eine der Blattfedern oder an eines der Scharniergelenke befestigt ist.

### Bezugszeichenliste

- 1: Nutzfahrzeug
- 2: Fahrerhauskabine
- 3: Stabilisator
- 4: Längsachse der Torsionsfeder
- 5: Torsionsfeder
- 6: Lenkerarm
- 7: Lenkerarm
- 8: Gummilager
- 9: Fahrzeugrahmen
- 10: Lageraufnahme
- 11: Lageraufnahme
- 12: Aktuator
- 13: Maschinenteil
- 14: Maschinenteil
- 15: Drehachse des Aktuators
- 16: Verbindungsrohr
- 17: Blattfeder
- 18: Verbindungsrohr
- 19: Blattfeder
- 20: Schraubverbindung
- 21: Schraubverbindung
- 22: Längsnut
- 23: Scharniergelenk
- 24: Scharnierachse
- 25: Scharniergelenk
- 26: Scharnierachse
- 27: Verzahnung

## Patentansprüche

1. Stabilisator für ein Nutzfahrzeug, mit
einer länglichen Torsionsfeder (5),
zwei fest mit der Torsionsfeder (5) verbundenen und sich von dieser wegerstreckenden Lenkerarmen (6, 7), zwischen denen sich die Torsionsfeder (5) erstreckt, und
einen der Torsionsfeder (5) parallel geschalteten Aktuator (12) **dadurch gekennzeichnet, dass**, der Aktuator unter Zwischenschaltung von Scharniergelenken (23, 25) oder Blattfedern (17, 19) mit der Torsionsfeder (5) oder den Lenkerarmen (6, 7) verbunden ist.

2. Stabilisator nach Anspruch 1,
**dadurch gekennzeichnet, dass**
die Lenkerarme (6, 7) senkrecht oder im Wesentlichen senkrecht zur Längsachse (4) der Torsionsfeder (5) ausgerichtet sind.

3. Stabilisator nach Anspruch 1 oder 2,
**dadurch gekennzeichnet, dass**
die Scharnierachsen (24, 26) der Scharniergelenke (23, 25) senkrecht oder im Wesentlichen senkrecht zur Längsachse (4) der Torsionsfeder (5)
und/oder zu einer Drehachse (15) des Aktuators (12) ausgerichtet sind.

4. Stabilisator nach einem der vorangehenden Ansprüche,
**dadurch gekennzeichnet, dass**
die Blattebenen der Blattfedern (17, 19) senkrecht oder im Wesentlichen senkrecht zur Längsachse (4) der Torsionsfeder (5) und/oder zu einer Drehachse (15) des Aktuators (12) ausgerichtet sind.

5. Stabilisator nach einem der vorangehenden Ansprüche,
**dadurch gekennzeichnet, dass**
der Aktuator (12) zwei relativ zueinander verdrehbare Maschinenteile (13, 14) aufweist, die mit den Scharniergelenken (23, 25) oder Blattfedern (17, 19) verbunden sind und durch Betätigen des Aktuators (12) relativ zueinander um eine Drehachse (15) verdreht werden oder werden können.

6. Stabilisator nach einem der vorangehenden Ansprüche,
**dadurch gekennzeichnet, dass**
der Aktuator (12) einen hydraulischen Schwenkmotor aufweist.

7. Stabilisator nach einem der vorangehenden Ansprüche,
**dadurch gekennzeichnet, dass**
der Aktuator (12) unter Zwischenschaltung wenigstens eines länglichen Betätigungsglieds (16, 18) mit den Scharniergelenken (23, 25) oder Blattfedern (17, 19) verbunden ist.

8. Stabilisator nach Anspruch 7,
**dadurch gekennzeichnet, dass**
das wenigstens eine Betätigungsglied (16, 18) von einem runden Rohr oder Stab gebildet ist.

9. Stabilisator nach einem der vorangehenden Ansprüche,
**dadurch gekennzeichnet, dass**
die Blattfedern (17, 19) sowohl mit dem Aktuator (12) als auch mit den Lenkerarmen (6, 7) durch Schraubverbindungen (20, 21) verbunden sind.

10. Stabilisator nach einem der vorangehenden Ansprüche,
**dadurch gekennzeichnet, dass**
die Torsionsfeder (5) von einem Rohr mit wenigstens einer Längsnut (22) gebildet ist.

11. Stabilisator nach einem der vorangehenden Ansprüche,
**dadurch gekennzeichnet, dass**
die Torsionsfeder (5) ein offenes Profil aufweist.

12. Stabilisator nach einem der vorangehenden Ansprüche,
**dadurch gekennzeichnet, dass**
der Aktuator (12) außerhalb der Torsionsfeder (5) angeordnet ist und eine parallel zur Torsionsfeder (5) verlaufende Drehachse (15) aufweist.

13. Stabilisator nach einem der Ansprüche 1 bis 11,
**dadurch gekennzeichnet, dass**
der Aktuator (12) in einem Innenraum der Torsionsfeder (5) sitzt.

14. Stabilisator nach einem der vorangehenden Ansprüche,
**dadurch gekennzeichnet, dass**
die Torsionsfeder (5) an einer Fahrerhauskabine (2) des Nutzfahrzeugs (1) drehbar gelagert ist,
die Lenkerarme (6, 7) mit einem Fahrzeugrahmen (9) des Nutzfahrzeugs (1) verbunden sind.

15. Stabilisator nach einem der vorangehenden Ansprüche,
**dadurch gekennzeichnet, dass**
der Aktuator (12) unter Zwischenschaltung der Scharniergelenke (23, 25) oder Blattfedern (17, 19) beidseitig mit den Lenkerarmen (6, 7) oder den Enden der Torsionsfeder (5) verbunden ist.

## Claims

1. Stabilizer for a utility vehicle, having an elongate torsion spring (5),
two link arms (6, 7) which are fixedly connected to and extend away from the torsion spring (5) and between which the torsion spring (5) extends, and
an actuator (12) which is connected in parallel with respect to the torsion spring (5), **characterized in that** the actuator is connected to the torsion spring (5) or to the link arms (6, 7) via hinge joints (23, 25) or leaf springs (17, 19).

2. Stabilizer according to Claim 1,
**characterized in that**
the link arms (6, 7) are oriented perpendicular or substantially perpendicular to the longitudinal axis (4) of the torsion spring (5).

3. Stabilizer according to Claim 1 or 2,
**characterized in that**
the hinge axes (24, 26) of the hinge joints (23, 25) are oriented perpendicular or substantially perpendicular to the longitudinal axis (4) of the torsion spring (5) and/or to an axis of rotation (15) of the actuator (12).

4. Stabilizer according to one of the preceding claims,
**characterized in that**
the leaf planes of the leaf springs (17, 19) are oriented perpendicular or substantially perpendicular to the longitudinal axis (4) of the torsion spring (5) and/or to an axis of rotation (15) of the actuator (12).

5. Stabilizer according to one of the preceding claims,
**characterized in that**
the actuator (12) has two machine parts (13, 14) which are rotatable relative to one another and which are connected to the hinge joints (23, 25) or leaf springs (17, 19) and which are or can be rotated relative to one another about an axis of rotation (15) by actuation of the actuator (12).

6. Stabilizer according to one of the preceding claims,
**characterized in that**
the actuator (12) has a hydraulic swivel motor.

7. Stabilizer according to one of the preceding claims,
**characterized in that**
the actuator (12) is connected to the hinge joints (23, 25) or leaf springs (17, 19) via at least one elongate actuation element (16, 18).

8. Stabilizer according to Claim 7,
**characterized in that**
the at least one actuation element (16, 18) is formed by a round tube or bar.

9. Stabilizer according to one of the preceding claims,
**characterized in that**
the leaf springs (17, 19) are connected both to the actuator (12) and also to the link arms (6, 7) by means of screw connections (20, 21).

10. Stabilizer according to one of the preceding claims,
**characterized in that**
the torsion spring (5) is formed by a tube with at least one longitudinal groove (22).

11. Stabilizer according to one of the preceding claims,
**characterized in that**
the torsion spring (5) has an open profile.

12. Stabilizer according to one of the preceding claims,
**characterized in that**
the actuator (12) is arranged outside the torsion spring (5) and has an axis of rotation (15) running parallel to the torsion spring (5).

13. Stabilizer according to one of Claims 1 to 11,
**characterized in that**
the actuator (12) is seated in an interior space of the torsion spring (5).

14. Stabilizer according to one of the preceding claims,
**characterized in that**
the torsion spring (5) is rotatably mounted on a driver's cab (2) of the utility vehicle (1),
the link arms (6, 7) are connected to a vehicle frame (9) of the utility vehicle (1).

15. Stabilizer according to one of the preceding claims,
**characterized in that**
the actuator (12) is connected at both sides to the link arms (6, 7) or the ends of the torsion spring (5) via the hinge joints (23, 25) or leaf springs (17, 19).

## Revendications

1. Barre anti-roulis pour un véhicule utilitaire, comprenant
un ressort de torsion allongé (5),
deux bras oscillants (6, 7) reliés solidement au ressort de torsion (5), s'étendant à l'écart de celui-ci et entre lesquels s'étend le ressort de torsion (5) et
un actionneur (12) connecté en parallèle par rapport au ressort de torsion (5),
**caractérisée en ce que**
l'actionneur est relié au ressort de torsion (5) ou aux bras oscillants (6, 7) par l'intermédiaire d'articulations à charnière (23, 25) ou de ressorts à lame (17, 19).

2. Barre anti-roulis selon la revendication 1,
**caractérisée en ce que**
les bras oscillants (6, 7) sont orientés perpendiculairement ou essentiellement perpendiculairement à l'axe longitudinal (4) du ressort de torsion (5).

3. Barre anti-roulis selon la revendication 1 ou 2,
**caractérisée en ce que**
les axes de charnière (24, 26) des articulations à charnière (23, 25) sont orientés perpendiculairement ou essentiellement perpendiculairement à l'axe longitudinal (4) du ressort de torsion (5) et/ou à un axe de rotation (15) de l'actionneur (12).

4. Barre anti-roulis selon l'une quelconque des revendications précédentes,
**caractérisée en ce que**
les plans de lame des ressorts à lame (17, 19) sont orientés perpendiculairement ou essentiellement perpendiculairement à l'axe longitudinal (4) du ressort de torsion (5) et/ou à un axe de rotation (15) de l'actionneur (12).

5. Barre anti-roulis selon l'une quelconque des revendications précédentes,
**caractérisée en ce que**
l'actionneur (12) comprend deux parties de machine (13, 14) pouvant être tournées l'une par rapport à l'autre, lesquelles sont reliées aux articulations à charnière (23, 25) ou aux ressorts à lame (17, 19) et sont ou peuvent être tournées l'une par rapport à l'autre autour d'un axe de rotation (15) par actionnement de l'actionneur (12).

6. Barre anti-roulis selon l'une quelconque des revendications précédentes,
**caractérisée en ce que**
l'actionneur (12) comprend un moteur de pivotement hydraulique.

7. Barre anti-roulis selon l'une quelconque des revendications précédentes,
**caractérisée en ce que**
l'actionneur (12) est relié aux articulations à charnière (23, 25) ou aux ressorts à lame (17, 19) par l'intermédiaire d'au moins un organe d'actionnement allongé (16, 18).

8. Barre anti-roulis selon la revendication 7,
**caractérisée en ce que**
l'au moins un organe d'actionnement (16, 18) est formé par un tube ou une barre rond(e).

9. Barre anti-roulis selon l'une quelconque des revendications précédentes,
**caractérisée en ce que**
les ressorts à lame (17, 19) sont reliés, au moyen de liaisons par vissage (20, 21), à la fois à l'actionneur (12) et aux bras oscillants (6, 7).

10. Barre anti-roulis selon l'une quelconque des revendications précédentes,
**caractérisée en ce que**
le ressort de torsion (5) est formé par un tube pourvu d'au moins une rainure longitudinale (22).

11. Barre anti-roulis selon l'une quelconque des revendications précédentes,
**caractérisée en ce que**
le ressort de torsion (5) présente un profil ouvert.

12. Barre anti-roulis selon l'une quelconque des revendications précédentes,
**caractérisée en ce que**
l'actionneur (12) est disposé à l'extérieur du ressort de torsion (5) et comprend un axe de rotation (15) s'étendant parallèlement au ressort de torsion (5).

13. Barre anti-roulis selon l'une quelconque des revendications 1 à 11,
**caractérisée en ce que**
l'actionneur (12) repose dans un espace intérieur du ressort de torsion (5).

14. Barre anti-roulis selon l'une quelconque des revendications précédentes,
**caractérisée en ce que**
le ressort de torsion (5) est monté à rotation sur une cabine de conducteur (2) du véhicule utilitaire (1),
et **en ce que** les bras oscillants (6, 7) sont reliés à un cadre de véhicule (9) du véhicule utilitaire (1) .

15. Barre anti-roulis selon l'une quelconque des revendications précédentes,
**caractérisée en ce que**
l'actionneur (12) est relié des deux côtés aux bras oscillants (6, 7) ou aux extrémités du ressort de torsion (5) par l'intermédiaire des articulations à charnière (23, 25) ou des ressorts à lame (17, 19) .
